(19) Europäisches Patentamt
European Patent Office
Office européen des brevets

(11) **EP 3 104 487 A1**

(12) **EUROPEAN PATENT APPLICATION**
published in accordance with Art. 153(4) EPC

(43) Date of publication:
**14.12.2016 Bulletin 2016/50**

(21) Application number: **14881797.6**

(22) Date of filing: **14.11.2014**

(51) Int Cl.:
**H02J 3/32** *(2006.01)*    **H02J 7/34** *(2006.01)*

(86) International application number:
**PCT/JP2014/080250**

(87) International publication number:
**WO 2015/118747 (13.08.2015 Gazette 2015/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.02.2014   JP 2014021690**

(71) Applicant: **Kabushiki Kaisha Toshiba**
**Minato-ku**
**Tokyo 105-8001 (JP)**

(72) Inventors:
• **KATAYAMA, Kyosuke**
**Tokyo 105-8001 (JP)**
• **SUYAMA, Akihiro**
**Tokyo 105-8001 (JP)**

• **KUBOTA, Kazuto**
**Tokyo 105-8001 (JP)**
• **MATSUE, Kiyotaka**
**Tokyo 105-8001 (JP)**
• **WADA, Takahisa**
**Tokyo 105-8001 (JP)**
• **NAGAIWA, Akihiro**
**Tokyo 105-8001 (JP)**
• **TAIRA, Hiroshi**
**Tokyo 105-8001 (JP)**
• **YAMAGISHI, Masayuki**
**Tokyo 105-8001 (JP)**

(74) Representative: **Moreland, David**
**Marks & Clerk LLP**
**Aurora**
**120 Bothwell Street**
**Glasgow G2 7JS (GB)**

(54) **ENERGY MANAGEMENT SYSTEM**

(57)    An energy management system (EMS) according to an embodiment includes an overcharging-overdischarging risk storage and a generation/storage optimization planner. The overcharging-overdischarging risk storage which stores an overcharging-overdischarging risk indicating a risk for overcharging-overdischarging to a power storage device of a hybrid power conditioner for converting a DC power to an AC power to output the AC power to a power distribution system, the DC power having been inputted from a power generator or the power storage device, the hybrid power conditioner being for converting an AC power into a DC power to output the DC power to the power storage device, the AC power having been inputted from the power distribution system. The generation storage optimization planner which calculates a control plan value for charging-discharging to the power storage device of the hybrid power conditioner on the basis of at least the overcharging-overdischarging risk, a power demand estimation, and a generated-power estimation for the power generator of the hybrid power conditioner.

FIG. 2

**Description**

[Technical Field]

Embodiments of the present invention relate to an energy management system.

[Background Art]

An energy management system (hereinafter referred to as an EMS) which controls a hybrid power conditioner system (hereinafter referred to as a hybrid PCS) in accordance with an energy use amount of power or the like in a building, a house, and a multiple dwelling house and reduces $CO_2$ and bought power has become widespread. In the hybrid PCS, a solar cell which performs solar photovoltaics (hereinafter referred to as a PV) is connected to a storage battery through a direct current (DC) circuit, and a charge-discharge amount of the storage battery is controlled by a common control device. Thus, the PV and the storage battery are regarded as being one alternating current (AC) power source in which a PV and a storage battery are integrally formed from the outside.

For this reason, in a hybrid PCS, even if a charging-discharging indication to the storage battery is attempted to be given from the outside, since a charge-discharge amount of the storage battery depends on a generated-power of a PV, a high-precision charging-discharging indication in which a residual-charge-discharge-amount falls within a predetermined range without overcharging-overdischarging the storage battery is given.

[Citation List]

[Patent Literature]

[Patent Literature 1] Japanese Unexamined Patent Application, First Publication No. 2011-70927

[Summary of Invention]

[Technical Problem]

An object to be accomplished by the present invention is to provide an energy management system (EMS) capable of giving a high-precision charging-discharging indication to a hybrid power conditioner system (PCS).

[Solution to Problem]

An energy management system (EMS) according to an embodiment includes an overcharging-overdischarging risk storage and a generation-storage optimization planner. The overcharging-overdischarging risk storage which stores an overcharging-overdischarging risk indicating a risk for overcharging-overdischarging to a power storage device of a hybrid power conditioner for converting a DC power to an AC power to output the AC power to a power distribution system, the DC power having been inputted from a power generator or the power storage device, the hybrid power conditioner being for converting an AC power into a DC power to output the DC power to the power storage device, the AC power having been inputted from the power distribution system. The generation storage optimization planner which calculates a control plan value for charging-discharging to the power storage device of the hybrid power conditioner on the basis of at least the overcharging-overdischarging risk, a power demand estimation, and a generated-power estimation for the power generator of the hybrid power conditioner.

[Brief Description of Drawings]

Fig. 1 is a view showing a device arrangement of an entire system including an energy management system (EMS) in an embodiment.
Fig. 2 is a view showing a configuration of an EMS in a first embodiment.
Fig. 3 is a flowchart showing a calculation procedure of a power storage device charge-discharge amount (performance) in a power storage device charge-discharge amount calculating functional section.
Fig. 4 is a flowchart showing a calculation procedure of a power conditioner system (PCS) charge-discharge amount (planned) in an overcharging-overdischarging risk avoidance generation/storage optimizing functional section.
Fig. 5 is a view showing an example of a PCS charge-discharge amount plan value serving as an output of the overcharging-overdischarging risk avoidance generation/storage optimizing functional section.

Fig. 6 is a flowchart showing an operational procedure of a hybrid PCS cooperating with an EMS.

Fig. 7 is a view showing a configuration of an EMS in a second embodiment.

Fig. 8 is a flowchart showing a calculation procedure of a PCS charge-discharge amount (planned) in the overcharging-overdischarging risk avoidance generation/storage optimizing functional section.

Fig. 9 is a view showing an example of an implementation of overcharging-overdischarging risks stored in a database (DB).

[Description of Embodiments]

Hereinafter, an energy management system (EMS) in an embodiment will be described with reference to the drawings.

(First embodiment)

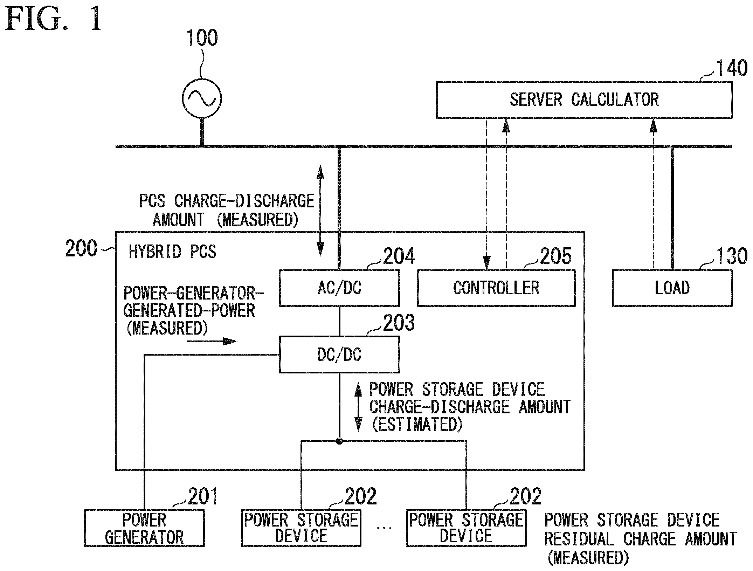

Fig. 1 is a view showing a device arrangement of an entire system including an EMS in an embodiment. The system shown in Fig. 1 includes a power distribution system 100, a load 130, a power generator 201, power storage devices 202, a server calculator 140, and a hybrid power conditioner system (PCS) 200 (a power conditioner).

The power distribution system 100 is a power distribution system of a building, a multiple dwelling house, a house, etc.

The load 130 is connected to the power distribution system 100 through alternating current (AC) power lines (an AC circuit) which transmit AC power. The power generator 201 and the power storage devices 202 are each connected to the hybrid PCS 200 through direct current (DC) power lines (a DC circuit) which transmit DC power. The power generator 201 may be any power generator and is not limited to a specific power generator. For example, the power generator 201 may be a photovoltaic (PV) (a solar cell), a fuel cell device, and a solar thermal power generator. Also, the power storage device 202 may be any power storage device and is not limited to a specific power storage device. The power storage device 202 may be, for example, a storage battery and a flywheel power storage device.

The server calculator 140 serves as the EMS in the embodiment. The server calculator 140 can be configured as a plurality of calculator groups and may be one calculator.

The hybrid PCS 200 includes a DC/DC converter (hereinafter referred to as a DC/DC) 203, an AC/DC converter (hereinafter referred to as an AC/DC) 204, and a controller 205. The hybrid PCS 200 performs stepping up/down of a voltage, stabilizing, current control, opening/closing of a circuit, protecting cooperation, etc. for DC power of power generated in the power generator 201 and charged-discharged in the power storage device 202.

The DC/DC 203 boosts a DC voltage of the power generator 201 and inputs the DC voltage to the AC/DC 204 through DC power lines. Alternatively, the DC/DC 203 inputs DC voltages from the power storage device 202 to the AC/DC 204 through DC power lines or steps down a DC voltage from the AC/DC 204 and inputs the DC voltage to the power storage device 202 through DC power lines.

The AC/DC 204 converts AC power input through AC power lines from the power distribution system 100 into DC power and inputs the converted DC power to the DC/DC 203 through DC power lines. The AC/DC 204 converts DC power input through DC power lines from the DC/DC 203 into AC power and outputs the converted AC power to the power distribution system 100 through AC power wires. The AC/DC 204 links the power generator 201 and the power storage device 202 to the power distribution system 100 as described above.

As described above, the hybrid PCS 200 is a power conditioner device which connects the power generator 201, the power storage device 202, and the DC/DC through the DC power lines and in which the AC/DC 204 (a bidirectional DC/AC inverter) is used by all of the devices.

The controller 205 can mutually communicate with the server calculator 140 serving as the EMS and controls the entire hybrid PCS 200. The controller 205 estimates charge-discharge amounts of the power storage devices in accordance with a power-generator-generated-power (measured) and at least one of a charging indication, a discharging indication, a charge amount indicating value, and a discharge amount indicating value, and calculates the power storage device charge-discharge amounts (estimated). The controller 205 controls the charge-discharge amount of the power storage device 202 on the basis of the power storage device charge-discharge amounts (estimated) serving as estimated results (details will be described below).

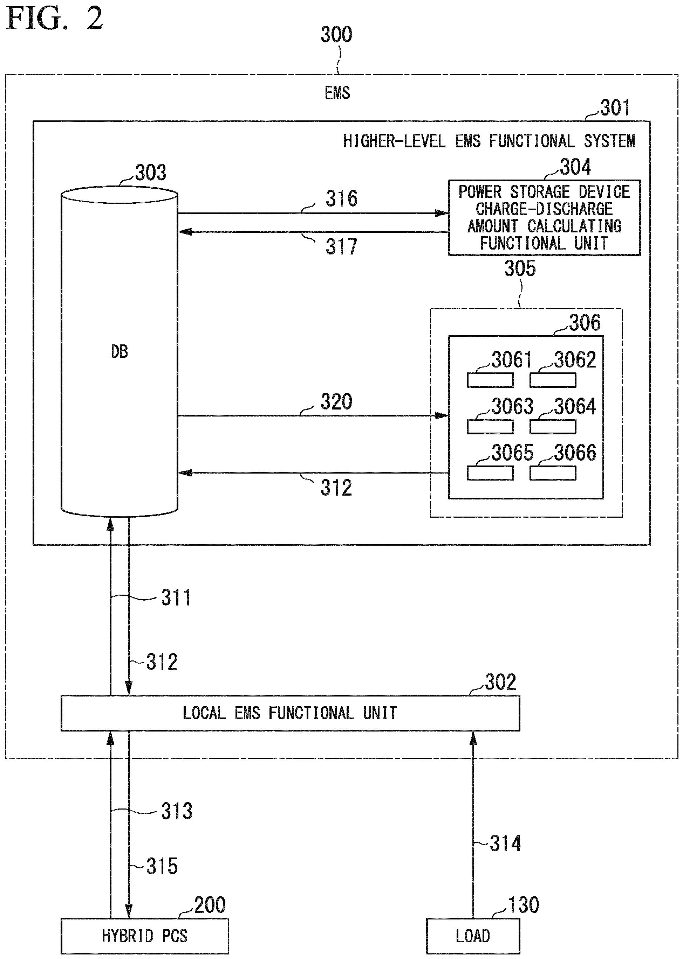

Fig. 2 is a view showing a configuration of an EMS in a first embodiment. An EMS 300 is configured as higher-level EMS functional systems 301 (an EMS server) and local EMS functional units 302. In the EMS in the embodiment, the higher-level EMS functional systems 301 and the local EMS functional units 302 are each disposed in a plurality of calculators in a distributed manner. The local EMS functional unit 302 corresponds to a local calculator installed in a building, a multiple dwelling house, and a house. Also, the higher-level EMS functional system 301 corresponds to a calculator in a cloud system or a data center connected to a local calculator over a public communication circuit network such as the Internet. The higher-level EMS functional system 301 includes a database (hereinafter referred to as a DB) 303 (an overcharging-overdischarging risk storage), a power storage device charge-discharge amount calculating functional unit 304, and an overcharging-overdischarging risk avoidance generation/storage optimizing functional section 305 (a generation/storage optimization planner).

The local EMS functional unit 302 receives measured values 313 (a power-generator-generated-power (measured), a PCS charge-discharge amount (measured), and a power storage device residual charge amount (measured)) from the controller 205 of the hybrid PCS 200. Also, the local EMS functional unit 302 receives a power demand (measured) 314 serving as a measured value of a power demand consumed by the load 130 from a power measurement system provided for the load 130. The local EMS functional unit 302 stores this data as performance values, and transmits the performance values as performance values 311 (a power-generator-generated-power (performance), a PCS charge-discharge amount (performance), a power storage device residual charge amount (performance), and a power demand (performance)) to the higher-level EMS functional system 301 in a predetermined period or when there is a request from the higher-level EMS functional system 301. The local EMS functional unit 302 transmits a PCS charge-discharge amount (indicated) 315 using a PCS charge-discharge amount (planned) 312 serving as a plan of a PCS charge-discharge amount received from the higher-level EMS functional system 301 as an indication value of the PCS charge-discharge amount to the hybrid PCS 200 in a predetermined period or at a time at which there is a request from the hybrid PCS 200.

The higher-level EMS functional system 301 receives the performance values 311 (the power-generator-generated-power (the performance), the PCS charge-discharge amount (performance), the power storage device residual charge amount (performance), and the power demand (performance)) from the local EMS functional unit 302 using data communication and stores the performance value 311 in the DB 303. Also, the higher-level EMS functional system 301 performs each calculation process in the power storage device charge-discharge amount calculating functional unit 304 and the overcharging-overdischarging risk avoidance generation/storage optimizing functional section 305 and transmits the PCS charge-discharge amount (planned) 312 serving as the plan of the PCS charge-discharge amount to the local EMS functional unit 302 (details will be described below).

The DB 303 stores the performance value 311 and the PCS charge-discharge amount (planned) 312 which are transmitted and received between the DB 303 and the local EMS functional unit 302. Also, the DB 303 delivers various performance values and calculation results in accordance with a request from the power storage device charge-discharge amount calculating functional unit 304 and the overcharging-overdischarging risk avoidance generation/storage optimizing functional section 305.

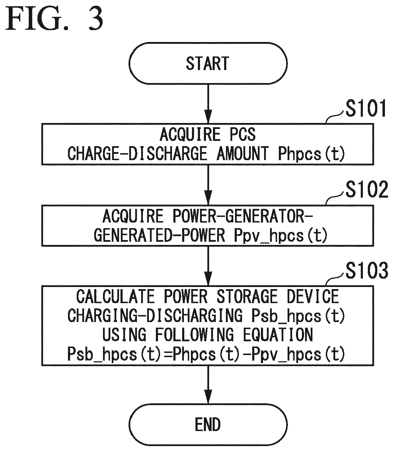

The power storage device charge-discharge amount calculating functional unit 304 reads performance values 316 serving as performance values of a power-generator-generated-power (performance), a PCS charge-discharge amount (performance), and a power storage device residual charge amount (performance) from the DB 303. The power storage device charge-discharge amount calculating functional unit 304 estimates and calculates a power storage device charge-discharge amount (performance) 317 serving as a performance value of a power storage device charge-discharge amount which cannot be acquired from the hybrid PCS 200 on the basis of the data and writes the power storage device charge-discharge amount (the performance) 317 to the DB 303. Note that a calculation procedure thereof will be described below in accordance with a flowchart shown in Fig. 3.

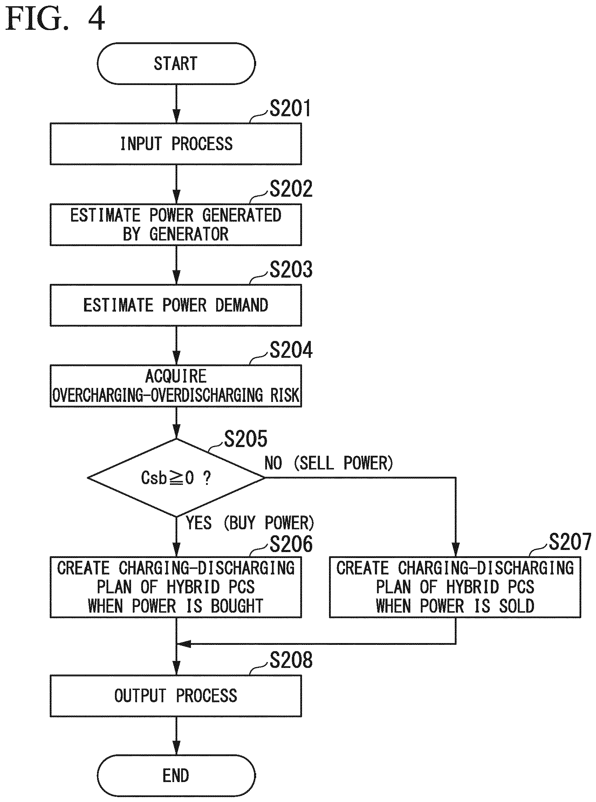

The overcharging-overdischarging risk avoidance generation/storage optimizing functional section 305 reads performance values 320 (a power-generator-generated-power (performance), a power demand (performance), a power storage device residual charge amount (performance), the power storage device charge-discharge amount (performance) 317 estimated and calculated by the power storage device charge-discharge amount calculating functional unit 304, power storage device charge-discharge loss, and overcharging-overdischarging risks) from the DB 303. The overcharging-overdischarging risk avoidance generation/storage optimizing functional section 305 calculates the PCS charge-discharge amount (planned) 312 serving as the plan of the PCS charge-discharge amount on the basis of the data and writes the calculated PCS charge-discharge amount (planned) 312 to the DB 303. Note that a calculation procedure thereof will be described below in accordance with a flowchart shown in Fig. 4. Also, an input interface when a user inputs overcharging-overdischarging risks to the DB 303 may be provided.

The overcharging-overdischarging risk avoidance generation/storage optimizing functional section 305 includes an optimizer 306. The optimizer 306 includes a power-generator-generated-power-input-estimate-processor 3061, a power-demand-estimate-input-processor 3062, a power-storage-device-SOC-input-processor 3063, an overcharging-overdischarging-risk-input-processor 3064, an overcharging-overdischarging-risk-penalty-calculator 3065, and a planned-value-output-processor 3066.

The power-generator-generated-power-input-estimate-processor 3061 receives an input of a power generator-generated-power (performance; generated-power of a power generator of a hybrid power conditioner) and calculates a power generator-generated-power (estimated).

The power-demand-estimate-input-processor 3062 receives an input of a power demand (an actually measured value of the power demand) and calculates a power demand (estimated).

The power-storage-device-SOC-input-processor 3063 receives an input of a power storage device residual-charge-discharge-amount (performance) (an actually measured value of a power storage device residual-charge-discharge-amount of the hybrid power conditioner). The power storage device residual-charge-discharge-amount (performance) is used when the overcharging-overdischarging-risk-penalty-calculator 3065 calculates a charge-discharge target value such that the charge-discharge target value calculated by the overcharging-overdischarging-risk-penalty-calculator 3065 has a sufficient margin with respect to protecting from an overcharging risk.

The overcharging-overdischarging-risk-input-processor 3064 receives an input of each of the overcharging-overdischarging risks. Here, the overcharging-overdischarging risk is a value indicating that the power storage device 202 approaches an overcharged or overdischarged state.

The overcharging-overdischarging-risk-penalty-calculator 3065 calculates a penalty for the overcharging-overdischarging risk on the basis of the input overcharging-overdischarging risk and determines a charge-discharge target value of the power storage device 202.

The planned-value-output-processor 3066 outputs a PCS charge-discharge amount (planned) (a planned value) to the DB 303.

Next, a calculation procedure of the power storage device charge-discharge amount (performance) 317 in the power storage device charge-discharge amount calculating functional unit 304 will be described.

Fig. 3 is a flowchart showing a calculation procedure of the power storage device charge-discharge amount (performance) 317 in the power storage device charge-discharge amount calculating functional unit 304. Note that the calculation procedure will be described using the following variables.

A performance value at a time t of a PCS charge-discharge amount (performance) included in the performance values 316 is set as Phpcs(t). Also, a performance value at the time t of a power-generator-generated-power (performance) included in the performance values 316 is set as Ppv_hpcs(t). A performance value at the time t of the calculated power storage device charge-discharge amount (performance) 317 is set as Psb_hpcs(t).

The power storage device charge-discharge amount calculating functional unit 304 acquires Phpcs(t) serving as a performance value at the time t of a PCS charge-discharge amount (performance) from the DB 303 (step S101).

The power storage device charge-discharge amount calculating functional unit 304 acquires Ppv_hpcs(t) serving as a power-generator-generated-power (performance) from the DB 303 (step S102).

The power storage device charge-discharge amount calculation functional unit 304 estimates and calculates Psb_hpcs(t) serving as a performance value at the time t of the power storage device charge-discharge amount (performance) 317 using the following Equation (1) (step S103).

$$\text{Psb\_hpcs(t)} = \text{Phpcs(t)} - \text{Ppv\_hpcs(t)} \qquad \text{Equation (1)}$$

Psb_hpcs(t) serving as a result of this estimation calculation is written as the power storage device charge-discharge amount (performance) 317 to the DB 303.

Next, a calculation procedure of the PCS charge-discharge amount (planned) 312 in the overcharging-overdischarging risk avoidance generation/storage optimizing functional section 305 will be described. Fig. 4 is a flowchart showing a calculation procedure of the PCS charge-discharge amount (planned) 312 in the overcharging-overdischarging risk avoidance generation/storage optimizing functional section 305.

The overcharging-overdischarging risk avoidance generation/storage optimizing functional section 305 performs an input process (step S201).

The overcharging-overdischarging risk avoidance generation/storage optimizing functional section 305 reads actually measured values excluding an overcharging-overdischarging risk among the performance values 320 from the DB 303. The power-generator-generated-power-input-estimate-processor 3061 reads a power generator-generated-power. The power-demand-estimate-input-processor 3062 reads a power demand (an actually measured value of the power demand). The power-storage-device-SOC-input-processor 3063 reads a power storage device residual-charge-discharge-amount (performance).

Next, the power-generator-generated-power-input-estimate-processor 3061 of the overcharging-overdischarging risk avoidance generation/storage optimizing functional section 305 performs a power generator power generation estimation (step S202). The power-generator-generated-power-estimate-input-processor 3061 estimates a power generator-generated-power on a target day using a particular previous power-generator-generated-power (performance), a weather forecast, etc. Since a weather forecast is needed to calculate a power-generator-generated-power estimated value, the power-generator-generated-power estimated value is calculated several times a day when the weather forecast is delivered.

The power-generator-generated-power estimated value can be implemented using a well-known method such as, for example, Patent Literature 2, that is, an estimation method based on a statistical correlation between different times in past data or a statistical correlation between positions of different power generators. The power generator-generated-power-estimate-input-processor 3061 inputs the estimated power generator power generation estimated value to the overcharging-overdischarging risk penalty calculator 3065.

Next, the power-demand-estimate-input-processor 3062 of the overcharging-overdischarging risk avoidance generation/storage optimizing functional section 305 performs a power demand estimation (step S203). The power-demand-estimate-input-processor 3062 performs a power demand estimation using an estimation method using a neural network from a weather forecast and pasts demand data (Patent Literature 3) or an estimation method using a demand variation model in which past demand data of a plurality of target demand objects are grouped and averaged for every group (Patent Literature 4), and calculates a power demand estimated value. The power-demand-estimate-input-processor 3062 inputs the estimated power demand estimated value to the overcharging-overdischarging risk penalty calculator 3065.

Next, the overcharging-overdischarging-risk-input-processor 3064 of the overcharging-overdischarging risk avoidance generation/storage optimizing functional section 305 reads an overcharging-overdischarging risk among the performance values 320 from the DB 303 (step S204).

The power-demand-estimate-input-processor 3062 inputs the read overcharging-overdischarging risk to the overcharging-overdischarging risk penalty calculator 3065.

Next, the overcharging-overdischarging risk penalty calculator 3065 of the overcharging-overdischarging risk avoidance generation/storage optimizing functional section 305 determines whether Csb represented by the following Equation (2) is positive or negative (step S205).

$$\text{Csb} = \text{Power demand estimated value} - \text{Power-generator-generated-power estimated}$$
$$\text{value} - \text{Charge-discharge target value} \qquad \text{Equation (2)}$$

The overcharging-overdischarging risk penalty calculator 3065 presumes a transaction state of power from the power distribution system 100 according to whether Csb is positive or negative.

The overcharging-overdischarging risk penalty calculator 3065 proceeds to step S206 when a value of Csb is a positiveor 0 (Yes in step S205).

The overcharging-overdischarging risk penalty calculator 3065 creates a charging-discharging plan of the hybrid PCS when electricity is bought which minimizes an evaluation function Fitness1 represented by the following Equation (3) (step S206).

$$\text{Fitness1} = \sum(t = 0{:}24)\{\text{W0} \times \text{Power selling unit price (t)} \times (\text{Power demand estimate}$$
$$(t) - \text{Power-generator-generated-power estimated value (t)} - \text{Charge-discharge target value}$$
$$(t)) + \text{W2} \times (\text{Overcharging-overdischarging risk})\} \qquad \text{Equation (3)}$$

On the other hand, the overcharging-overdischarging risk penalty calculator 3065 processes to step S207 when the value of Csb is a negative (No in step S205).

The overcharging-overdischarging risk penalty calculator 3065 creates a charging-discharging plan of the hybrid PCS when electricity is sold which minimizes an evaluation function Fitness2 represented by the following Equation (4) (step S207).

$$\text{Fitness2} = \sum(t = 1{:}T)\{\text{W1} \times \text{Power selling unit price (t)} \times (-\text{Power demand estimate}$$
$$(t) + \text{Power-generator-generated-power estimate (t)} + \text{Charge-discharge target value}$$
$$(t)) + \text{W2} \times (\text{Overcharging-overdischarging risk}) \qquad \text{Equation (4)}$$

Note that Fitnesses1 and 2 (penalties) can be minimized by a technique of using a well-known genetic algorithm (Non-patent Literature 1).

The planned-value-output-processor 3066 of the overcharging-overdischarging risk avoidance generation/storage optimizing functional section 305 performs an output process (step S208). The planned-value-output-processor 3066 writes the PCS charge-discharge amount (planed) 312 created by the overcharging-overdischarging risk penalty calculator 3065 to the DB 303.

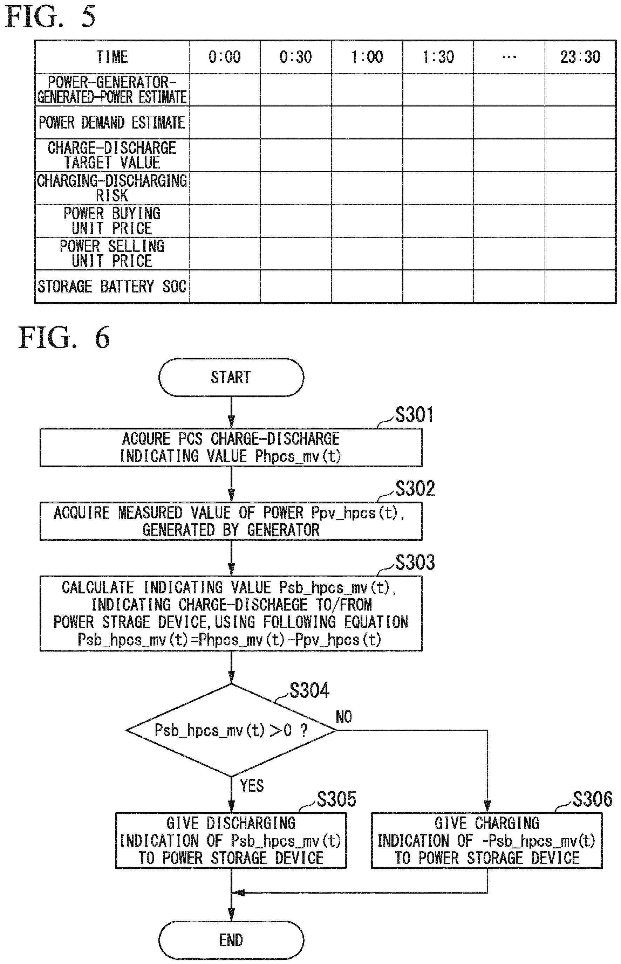

Fig. 5 is a view showing an example of a PCS charge-discharge amount plan value serving as an output of the overcharging-overdischarging risk avoidance generation/storage optimizing functional section 305. A calculated power-generator-generated-power estimated value, a demand estimated value, a charge-discharge target value, an overcharging-overdischarging risk used for calculation, a power buying unit price, a power selling unit price, and a power storage device SOC (a power storage device residual-charge-discharge-amount) are associated with a time at which the overcharging-overdischarging risk avoidance generation/storage optimizing functional section 305 performs writing on the DB 303, and are written as a PCS charge-discharge amount plan value to the PCS charge-discharge amount (planned) 312.

The local EMS functional unit 302 transmits the PCS charge-discharge amount (planned) 312 as a PCS charge-discharge amount (indicated) 315 to the controller 205 of the hybrid PCS 200 in a predetermined period or at a time at which there is a request from the hybrid PCS 200. Note that an output interface on which the PCS charge-discharge amount (planned) 312 and the overcharging-overdischarging risk are simultaneously displayed may be configured to be provided on the local EMS functional unit 302.

As described above, in the EMS 300 in the first embodiment, the overcharging-overdischarging risk avoidance generation/storage optimizing functional section 305 (the generation/storage optimization planner) calculates the PCS charge-discharge amount (planned) 312 (a charge-discharge control plan value) for the power storage device 202 of the hybrid PCS 200 on the basis of at least the overcharging-overdischarging risk, a power demand estimate, and a power-generator-generated-power estimated value (a generated-power estimate for the power generator of the hybrid power conditioner). Thus, the EMS 300 which can give a high-precision charging-discharging indication, in which a residual-charge-discharge-amount falls within a predetermined range without overcharging and overdischarging power storage devices, to the hybrid PCS 200 can be provided.

Subsequently, an operation of the controller 205 which controls the entire hybrid PCS 200 when the PCS charge-discharge amount (indicated) 315 is received from the local EMS functional unit 302 will be described. Fig. 6 is a flowchart showing an operation procedure of the hybrid PCS 200 cooperating with the EMS 300. The procedure will be described using the following variables. Note that a calculation procedure will be described using the following variables. An indicating value of a PCS charge-discharge amount at the time t is set as Phpcs_mv(t). Also, a power storage device charge-discharge indicating value at the time t is set as Psb_hpcs_mv(t).

The controller 205 receives the indicating value Phpcs_mv(t) of the PCS charge-discharge amount from the local EMS functional unit 302 (step S301).

Next, the controller 205 acquires a power-generator-generated-power measurement value Ppv_hpcs(t) from the power generator 201 (step S302).

The controller 205 calculates the power storage device charge-discharge indicating value Psb_hpcs_mv(t) using the following Equation (5) (step S303).

$$\mathrm{Psb\_hpcs\_mv(t) = Phpcs\_mv(t) - Ppv\_hpcs(t)} \qquad \text{Equation (5)}$$

The controller 205 determines whether the power storage device charge-discharge indicating value Psb_hpcs_mv(t) is greater than 0 at the time t (step S304).

The controller 205 sets a discharge amount estimated value of the power storage device 202 to be Psb_hpcs_mv(t) when Psb_hpcs_mv(t) > 0 (Yes in step S304) and discharges a discharge amount corresponding to Psb_hpcs_mv(t) from the power storage device 202 (step S305).

For example, when the indicating value Phpcs_mv(t) of the PCS charge-discharge amount serving as a discharge amount of the hybrid PCS 200 is 1000 W (watts) and the power-generator-generated-power measurement value Ppv_hpcs(t) is 100 W, Psb_hpcs_mv(t) = 1000 W-100 W = 900 W based on Equation (5). In other words, the discharge amount estimated value of the power storage device 202 is a value obtained by subtracting 100 W serving as a generated-power amount performance value of the power generator 201 from 1000 W serving as a discharge indicating value from the power conditioner device. The controller 205 sets 900 W corresponding to the discharge amount estimated value of the power storage device 202 to be a discharge amount of 900 W, and controls the power storage device 202 to discharge the discharge amount of 900 W from the power storage device 202.

On the other hand, the controller 205 sets the charge amount estimated value of the power storage device 202 to be (-Psb_hpcs_mv(t)) when Psb_hpcs_mv(t) ≤ 0 (No in step S304) and charges a charge amount corresponding to (-Psb_hpcs_mv(t)) to the power storage device 202 (step S306).

For example, when the indicating value Phpcs_mv(t) of the PCS charge-discharge amount serving as a charge amount of the hybrid PCS 200 is 1000 W (watts) and the power-generator-generated-power measurement value Ppv_hpcs(t) is 100 W, Psb_hpcs_mv(t) =-1000 W-100 W =-1100W on the basis of Equation (5) is satisfied. In other words, the charge amount estimated value to the power storage device 202 is a value obtained by adding 1000 W serving as a charge indicating value to the power conditioner device and 100 W serving as the generated-power performance value of the power generator 201. The controller 205 sets 1100 W corresponding to the charge amount estimated value of the power storage device 202 to be a charge amount of 1100 W, and controls the power storage device 202 to charge the charge amount of 1100 W to the power storage device 202.

Also, for example, when the indicating value Phpcs_mv(t) of the PCS charge-discharge amount serving as a discharge amount from the hybrid PCS 200 is 1000 W (watts), and the power-generator-generated-power measurement value Ppv_hpcs(t) is 1100 W, Psb_hpcs_mv(t) = 1000 W-1100 W = -100W from Equation (5) is satisfied. In other words, the charge amount estimated value of the power storage device 202 is a value obtained by subtracting 1000 W serving as a discharge indicating value from the power conditioner device from 1100 W serving as the generated-power performance value of the power generator 201. The controller 205 sets 100 W corresponding to the charge amount estimated value of the power storage device 202 to be a charge amount of 100 W and controls the power storage device 202 to charge the charge amount of 100 W to the power storage device 202.

As described above, in the EMS 300 in the embodiment, in the EMS 300 in the embodiment, the charge-discharge amount indicating value Phpcs_mv (at least one of the charging indication, the discharging indication, the charge amount indicating value, and the discharge amount indicating value) is given to the hybrid PCS 200 on the basis of an estimated result of a parameter value of the hybrid PCS 200. The hybrid PCS 200 controls the charge-discharge amount of the power storage device 202 in accordance with a generated-power of the power generator 201 and at least one of a charging indication, a discharging indication, a charge amount indicating value, and a discharge amount indicating value from the EMS 300.

In an EMS in the related art, a generated-power of a power generator which is measured inside a hybrid PCS can be acquired from the outside, but a charge-discharge amount to a power storage device cannot be acquired from the outside. Therefore, in the EMS in the related art, the charge-discharge amount to the power storage device needs to be estimated and calculated from the generated-power of the power generator, a charge-discharge measurement value of the hybrid PCS, and property parameters of the hybrid PCS such as a performance value of the charge-discharge amount of the power storage device. However, even if the hybrid PCS has a plurality of power storage device units, the hybrid PCS is designed such that the power storage device units can be handled as one power storage device from the outside. Thus, which of the power storage device units is being charged or discharged at the moment cannot be recognized from the outside. When the hybrid PCS receives a discharging indication from the outside, the hybrid PCS discharges an insufficient amount from the power storage device when the power-generator-generated-power does not reach a desired discharge amount indicating value and charges surplus power to the power storage device when the power-generator-generated-power exceeds the desired discharge amount indicating value. When a charging indication is received from the outside, power obtained by adding bought power from a power distribution system serving as a charge amount indicating value and the power-generator-generated-power is charged to the power storage device. A charge-discharge amount to the power storage device depends on the power-generator-generated-power, and the desired indicating value cannot be given to the hybrid PCS from the outside. Therefore, the charge-discharge indicating value needs to be controlled to an appropriate value from the outside in consideration of a power storage device capacity and the power-generator-generated-power to maintain a residual charge amount in a desired range without overcharging or overdischarging the power storage device in the hybrid PCS.

In the EMS in the first embodiment, in the hybrid PCS, the overcharging-overdischarging risk avoidance generation/storage optimizing functional section 305 (the generation/storage optimization planner) uses an overcharging and overdischarging risk model (an overcharging-overdischarging risk model) on the basis of a power-generator-generated-power acquired in real time to charge-discharge the power storage device in accordance with a user's objective such as minimum cost while maintaining a residual charge amount in a desired range. The overcharging-overdischarging risk avoidance generation/storage optimizing functional section 305 calculates the PCS charge-discharge amount (planned) 312 (the charge-discharge control plan value) for the power storage device 202 of the hybrid PCS 200. Thus, a high-precision charge-discharge indicating in which a residual-charge-discharge-amount falls within a desired range without overcharging or overdischarging the power storage device can be given to the hybrid PCS 200.

(Second embodiment)

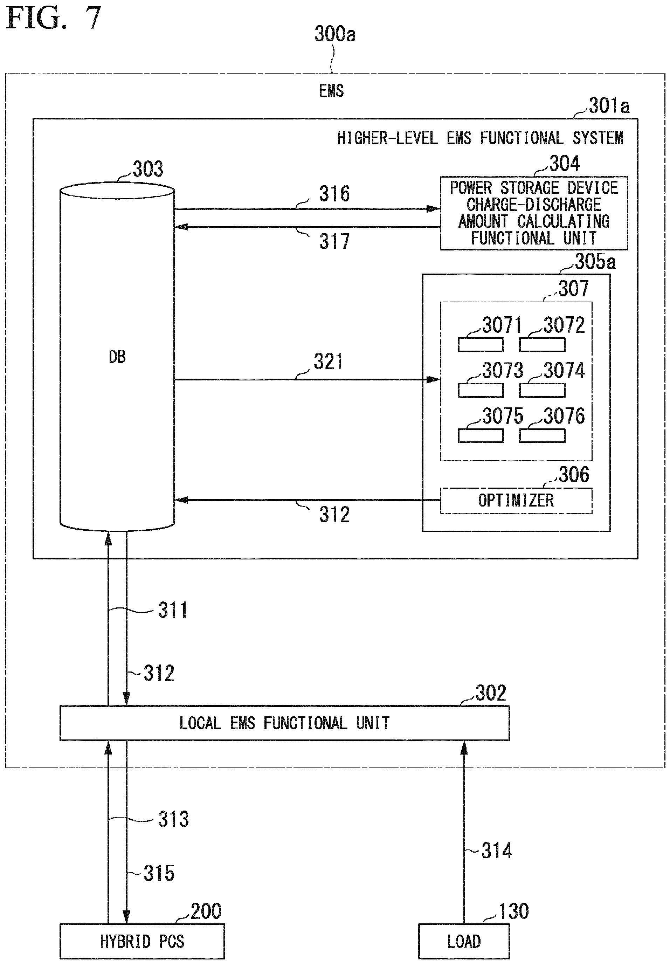

Fig. 7 is a view showing a configuration of an EMS in a second embodiment. Note that, in Fig. 7, the same components as those of Fig. 2 will be denoted with the same reference numerals, and description thereof will be omitted. In an EMS 300a shown in Fig. 7, an overcharging-overdischarging risk avoidance generation/storage optimizing functional section 305a includes the optimizer 306 and an overcharging-overdischarging risk updater 307. In other words, in the EMS 300a shown in Fig. 7, the overcharging-overdischarging risk updater 307 is added to the overcharging-overdischarging risk avoidance generation/storage optimizing functional section 305 shown in Fig. 2.

The overcharging-overdischarging risk updater 307 reads input values 321 (a power-generator-generated-power (estimated), a power-generator-generated-power (actually measured), a power storage device residual charge amount (performance), a PCS charge-discharge amount (planned), and overcharging-overdischarging risks) from the DB 303 and sequentially updates overcharging-overdischarging risks stored in the DB 303 on the basis of the data. The other portions are the same as those of the EMS 300 in the first embodiment.

Note that the power-generator-generated-power (estimated) and the PCS charge-discharge amount (planned) correspond to the power generator generated-power estimated value and the power storage device charge-discharge amount (target value) included in the PCS charge-discharge amount (planned) 312 output by the optimizer 306, respectively.

The overcharging-overdischarging risk updater 307 includes an overcharging-overdischarging-risk-input-processor 3071, a power generator-generated-power-input-estimate-processor 3072, a power-storage-device-SOC-input-processor 3073, a power-storage-device-system-planning-input-processor 3074, an overcharging-overdischarging-risk-probabilistic-model-optimizer 3075, and an overcharging-overdischarging-risk-output-processor 3076. The overcharging-overdischarging-risk-input-processor 3071 receives an input of each of overcharging-overdischarging risks. The overcharging-overdischarging risk is updated as will be described below.

The power-generator-generated-power-input-estimate-processor 3072 receives an input of a power-generator-generated-power (performance) and calculates a power-generator-generated-power (estimated).

The power-storage-device-SOC-input-processor 3073 receives an input of a power storage device residual-charge-discharge-amount (performance). The residual amount is used to update the overcharging-overdischarging risk.

The power-storage-device-system-planning-input-processor 3074 receives an input of a PCS charge-discharge amount (planned) which is written in the DB 303 in advance.

The overcharging-overdischarging-risk-probabilistic-model-optimizer 3075 updates the input overcharging-overdischarging risk using a probabilistic model function on the basis of a power-generator-generated-power (estimated), a power storage device residual-charge-discharge-amount (performance), and a PCS charge-discharge amount (planned) as will be described below.

The overcharging-overdischarging-risk-output-processor 3076 outputs the overcharging-overdischarging risk updated by the overcharging-overdischarging-risk-probabilistic-model-optimizer 3075 to the optimizer 306 and updates the overcharging-overdischarging risk stored in the DB 303.

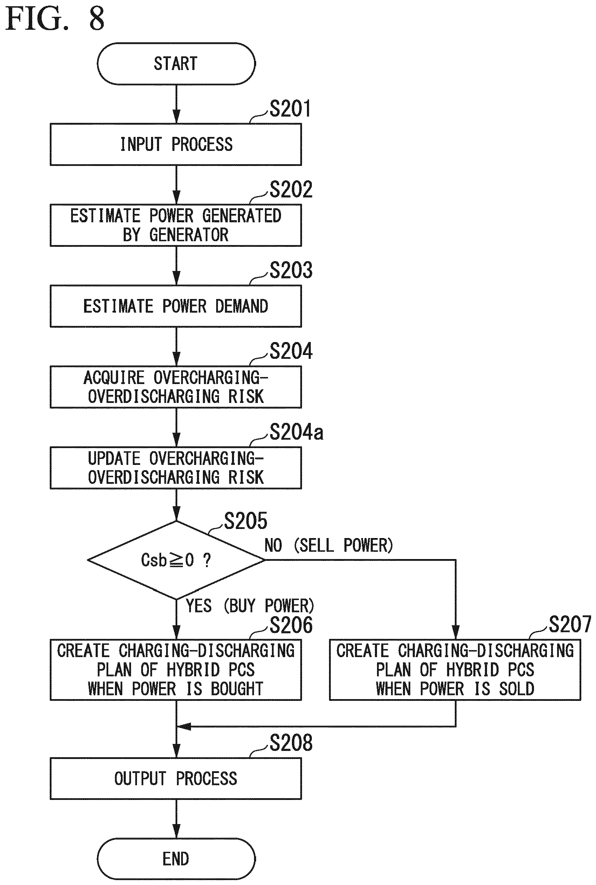

Fig. 8 is a flowchart showing a calculation procedure of the PCS charging-discharging amount (planned) 312 in the overcharging-overdischarging risk avoidance generation/storage optimizing functional section 305a. Note that steps S201 to S203 and steps S205 to S208 shown in Fig. 8 are the same as those of Fig. 4 used for describing the first embodiment, and description thereof will be omitted. Here, step S204 will be mainly described.

In the second embodiment, a value of the overcharging-overdischarging risk stored in the DB 303 is updated in accordance with a change in the overcharging-overdischarging risk. This is because the overcharging-overdischarging risk is changed according to age-deterioration of power storage devices of the hybrid PCS 202, the AC/DC 204, the DC/DC 203, other component elements, electric cables, etc. For example, it is known that a capacity of the power storage device 202 is reduced every time charging and discharging is repeated. Therefore, the overcharging-overdischarging risk is increased in accordance with a time for which the hybrid PCS 202 is operated. On the other hand, when a deteriorated power storage device or component element is replaced with a new one, the overcharging-overdischarging risk is reduced.

In the second embodiment, the overcharging-overdischarging risk is expressed using a probabilistic model function or a discrete probabilistic table. Here, a case in which the overcharging-overdischarging risk is expressed using a probabilistic model function R(t) will be described. Here, an overcharging-overdischarging risk R(t) is a functional value which may be a value between [0,1]. The overcharging-overdischarging risk R(t) is not briefly determined, but can be acquired using, for example, functions such as the following Equations (6) to (9).

$$R(t) = W3 * (R_1(S(t)) + R_2(P(t)) + R_3(W(t))) \qquad \text{Equation (6)}$$

$$R_1(S(t)) = (a/2500) * (S(t) - 50)^2 \qquad \text{Equation (7)}$$

$$R_2(P(t)) = b * \exp(P(t) - Pmax) \qquad \text{Equation (8)}$$

$$R_3(W(t)) = (c/Wmax^2) * W(t)^2 \qquad \text{Equation (9)}$$

Here, R(t) indicates an overcharging-overdischarging risk at the time t, P(t) indicates a power-generator-generated-power estimate value at the time t, S(t) indicates a power storage device SOC (a residual-charge-discharge-amount), and W(t) indicates a hybrid PCS plan value at the time t. In addition, Pmax indicates a maximum value of a power-generator-generated-power (a maximum acquired from an actually measured value), Wmax indicates a maximum of a charge-discharge amount (a maximum value acquired from an actually measured value), and W3, a, b, and c indicate constant values (functional parameters).

The overcharging-overdischarging risk probabilistic model optimizer 3075 updates the input overcharging-overdischarging risk on the basis of the power-generator-generated-power (estimated), the power storage device residual-charge-discharge-amount (performance), and the PCS charge-discharge amount (planned) (step S204a). As described above, the overcharging-overdischarging risk probabilistic model optimizer 3075 calculates a change in an overcharging-overdischarging risk using a predefined probabilistic model function using the power-generator-generated-power (estimated), the power storage device residual-charge-discharge-amount (performance), and the PCS charge-discharge amount (planned) as variables, and updates the overcharging-overdischarging risk. The updated overcharging-overdischarging risk is stored in the DB 303 by the overcharging-overdischarging risk output processor 3076 along with functional parameters of the probabilistic model function.

Note that the overcharging-overdischarging risk updater 307 may have the following configuration. In other words, the overcharging-overdischarging risk updater 307 includes the overcharging-overdischarging-risk-input-processor 3071, the power-generator-generated-power-input-estimate- processor 3072, the power-storage-device-SOC-input-processor 3073, the power-storage-device-system-planning-input-processor 3074, a power-generator-generated-power-discretization-estimate-unit, a power-storage-device-SOC-discretizaiton-unit, a hybrid-PCS-planning-discretization-unit, and the overcharging-overdischarging-risk-output-processor 3076.

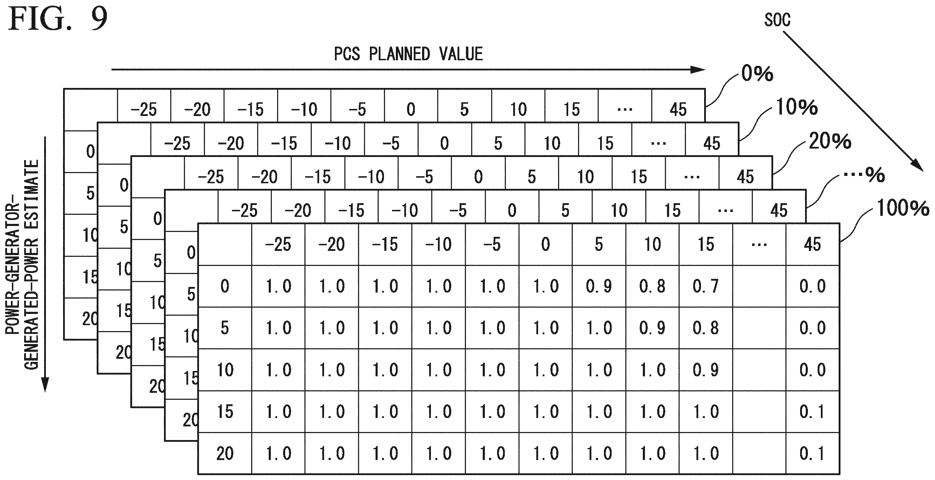

The power-generator-generated-power-discretization-estimate-unit converts an estimated value of a power generator-generated-power into a form to be input to the discrete probabilistic table. The power-storage-device-SOC-discretization-unit converts a power storage device residual-charge-discharge-amount into a form to be input to the discrete probabilistic table. The hybrid-PCS-planning-discretization-unit converts a plan value into a form to be input to the discrete probabilistic table. The overcharging-overdischarging risk probabilistic optimizer associates an overcharging-overdischarging risk with three pieces of information such as a power-generator-generated-power estimate, a power storage device SOC, and a hybrid PCS plan value and updates the overcharging-overdischarging risk to a form to be stored in a discrete probabilistic table using the power-generator-generated-power estimate, the power storage device SOC, and the hybrid PCS plan value as items. Note that, in the updating, the power-generator-generated-power estimate discretization section calculates a change in the overcharging-overdischarging risk using a predefined probabilistic model function using a power-generator-generated-power (estimated), a power storage device residual-charge-discharge-amount (performance), and a PCS charge-discharge amount (planned) as variables, and updates the overcharging-overdischarging risk. The updated overcharging-overdischarging risk is stored in the DB 303 by the overcharging-overdischarging-risk-output-processor 3076. Fig. 9 is a view showing an example of an implementation of overcharging-overdischarging risks stored in the DB 303. As shown in Fig. 9, each of the overcharging-overdischarging risks is associated with three pieces of information such as a power-generator-generated-power estimate, a power storage device SOC, and a hybrid PCS plan value and stored.

Referring again to Fig. 7, the updated overcharging-overdischarging risk in the overcharging-overdischarging risk updater 307 is input to the optimizer 306 by the overcharging-overdischarging-risk-output-processor 3076. As described in the first embodiment, the optimizer 306 creates the PCS charge-discharge amount (planned) 312 on the basis of the updated overcharging-overdischarging risk and writes the PCS charge-discharge amount (planned) 312 to the DB 303 (steps S205 to S208).

As described above, in the EMS 300a in the second embodiment, the overcharging-overdischarging risk updater 307 updates the overcharging-overdischarging risk, and the overcharging-overdischarging risk avoidance generation/storage optimizing functional section 305a (the generation/storage optimization planning section) calculates the PCS charge-discharge amount (planned) 312 (the charge-discharge control plan value) for the power storage device 202 of the hybrid PCS 200 on the basis of at least the updated overcharging-overdischarging risk, a power demand estimate, and a power-generator-generated-power estimated value (a generated-power estimate for the power generator of the hybrid power conditioner). Thus, in the EMS 300a, a high-precision charging-discharging indication in which a residual-charge-discharge-amount falls within a predetermined range without overcharging or overdischarging the power storage device 202 can be given to the hybrid PCS 200 even if the overcharging-overdischarging risk is changed while the hybrid PCS 200 is being operated.

According to at least one of the embodiments described above, an energy management system calculates a charge-discharge control plan value for a power storage device of a hybrid PCS on the basis of at least an overcharging-overdischarging risk, a power demand estimate, and a generated-power estimate for a power generator of a hybrid power conditioner using a generation/storage optimization planner included therein. Thus, the energy management system in which a high-precision charging-discharging indication, in which a residual-charge-discharge-amount falls within a predetermined range without overcharging or overdischarging the power storage device, can be given to the hybrid PCS can be provided.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. An energy management system comprising:

   an overcharging-overdischarging risk storage which stores an overcharging-overdischarging risk indicating a risk for overcharging-overdischarging to a power storage device of a hybrid power conditioner for converting a DC power to an AC power to output the AC power to a power distribution system, the DC power having been inputted from a power generator or the power storage device, the hybrid power conditioner being for converting an AC power into a DC power to output the DC power to the power storage device, the AC power having been inputted from the power distribution system,
   a generation storage optimization planner which calculates a control plan value for charging-discharging to the power storage device of the hybrid power conditioner on the basis of at least the overcharging-overdischarging risk, a power demand estimation, and a generated-power estimation for the power generator of the hybrid power conditioner.

2. The energy management system according to claim 1, comprising:

   an overcharging-overdischarging risk update unit which calculates a change in the overcharging-overdischarging risk from the overcharging-overdischarging risk, the generated-power estimation for the power generator of the hybrid power conditioner, a generated-power performance, a power storage device residual-charge-discharge-amount of the hybrid power conditioner, and the control plan value, which are stored in the overcharging-overdischarging risk storage, and the overcharging-overdischarging risk update unit that updates the overcharging-overdischarging risk on the basis of the change.

3. The energy management system according to claim 1 or 2, wherein the overcharging-overdischarging risk storage stores each of the generated-power estimation for the power generator of the hybrid power conditioner, the power storage device residual-charge-discharge-amount of the hybrid power conditioner, and the control plan value, in association with the overcharging-overdischarging risk.

4. The energy management system according to claim 3, wherein the overcharging-overdischarging risk storage stores the generated-power estimation for the power generator of the hybrid power conditioner, the power storage device residual-charge-discharge-amount of the hybrid power conditioner, and the control plan value in association with the overcharging-overdischarging risk using a predefined probabilistic model function having the generated-power estimation for the power generator of the hybrid power conditioner, the power storage device residual-charge-discharge-amount of the hybrid power conditioner, and the control plan value as variables and stores functional parameters of the probabilistic model function.

5. The energy management system according to claim 3, wherein the overcharging-overdischarging risk storage stores the generated-power estimation for the power generator of the hybrid power conditioner, the power storage device residual-charge-discharge-amount of the hybrid power conditioner, and the control plan value in association with the overcharging-overdischarging risk using a discrete probabilistic table having the generated-power estimation for the power generator of the hybrid power conditioner, the power storage device residual-charge-discharge-amount of the hybrid power conditioner, and the control plan value as items.

6. The energy management system according to claim 1 or 2, wherein the generation storage optimization planner comprises:

   a power-generator-generated-power-input-estimate-processor which receives an input of a generated-power of the power generator of the hybrid power conditioner and calculates a power-generator-generated-power estimated value,

a power-demand-estimate-input-processor which receives an input of an actually measured value of a power demand and calculates a power demand estimated value,

a power-storage-device-SOC-input-processor which receives an input of an actually measured value of the power storage device residual-charge-discharge-amount of the hybrid power conditioner,

an overcharging-overdischarging-risk-input-processor which receives an input of the overcharging-overdischarging risk,

an overcharging-overdischarging-risk-penalty-calculator which calculates a penalty for the overcharging-overdischarging risk on the basis of the overcharging-overdischarging risk, the power-generator-generated-power estimated value, the power demand estimated value, and the actually measured value of the power storage device residual-charge-discharge-amount which are input, and calculates the control plan value on the basis of the penalty, and

an output processor which calculates the control plan value.

7. The energy management system according to claim 2, wherein the overcharging-overdischarging risk updater includes:

an overcharging-overdischarging-risk-input-processor which receives an input of the overcharging-overdischarging risk,

a power-generator-generated-power-input-estimation-processor which receives an input of a generated-power of the power generator of the hybrid power conditioner and calculates a power-generator-generated-power estimated value,

a power-storage-device-SOC-input-processor which receives an input of an actually measured value of the power storage device residual-charge-discharge-amount of the hybrid power conditioner,

a hybrid-power-conditioner-system (PCS)-planning-input-processor which receives an input of the control plan value,

an overcharging-overdischarging risk probabilistic model optimizer which updates the overcharging-overdischarging risk using a probabilistic model function, the power-generator-generated-power estimated value, a power demand estimated value, and the actually measured value of the power storage device residual-charge-discharge-amount, and

an overcharging-overdischarging-risk-output-processor which stores the updated overcharging-overdischarging risk in the overcharging-overdischarging risk storage.

8. The energy management system according to claim 2, wherein the overcharging-overdischarging risk updater includes:

an overcharging-overdischarging-risk-input-processor which receives an input of the overcharging-overdischarging risk,

a power-generator-generated-power-input-estimate-processor which receives an input of a generated-power of the power generator of the hybrid power conditioner,

a power-storage-device-SOC-input-processor which receives an input of an actually measured value of the power storage device residual-charge-discharge-amountof the hybrid power conditioner,

a hybrid-PCS-planning-input-processor which receives an input of the control plan value,

a power-generator-generated-power-discretization-estimate-unit which inputs a power-generator-generated-power estimated value to a discrete probabilistic table,

a power-storage-device-SOC-discretization-unit which inputs the power storage device residual-charge-discharge-amount to the discrete probabilistic table,

a hybrid-PCS-planning-discretization-unit which inputs the control plan value to the discrete probabilistic table,

an overcharging-overdischarging-risk-probabilistic-optimizer which updates the overcharging-overdischarging risk on the basis of the power generator-generated-power estimated value, the power storage device residual-charge-discharge-amount, and the control plan value, and inputs the updated overcharging-overdischarging risk to the discrete probabilistic table, and

an overcharging-overdischarging-risk-output-processor which stores the updated overcharging-overdischarging risk in the overcharging-overdischarging risk storage.

9. The energy management system according to any one of claims 1 to 8, comprising:

an interface which inputs the overcharging-overdischarging risk to the overcharging-overdischarging risk storage.

**10.** The energy management system according to any one of claims 1 to 9, comprising:

another interface which outputs the overcharging-overdischarging risk along with the control plan value.

# FIG. 1

EP 3 104 487 A1

# FIG. 2

**300** EMS

**301** HIGHER-LEVEL EMS FUNCTIONAL SYSTEM

**303** DB

**304** POWER STORAGE DEVICE CHARGE-DISCHARGE AMOUNT CALCULATING FUNCTIONAL UNIT

**316**

**317**

**305**

**306**

**3061** **3062**

**3063** **3064**

**3065** **3066**

**320**

**312**

**311**

**312**

**302** LOCAL EMS FUNCTIONAL UNIT

**313**

**315**

**314**

**200** HYBRID PCS

**130** LOAD

FIG. 3

START

↓

S101
ACQUIRE PCS
CHARGE-DISCHARGE AMOUNT Phpcs(t)

↓

S102
ACQUIRE POWER-GENERATOR-
GENERATED-POWER Ppv_hpcs(t)

↓

S103
CALCULATE POWER STORAGE DEVICE
CHARGING-DISCHARGING Psb_hpcs(t)
USING FOLLOWING EQUATION
Psb_hpcs(t)=Phpcs(t)-Ppv_hpcs(t)

↓

END

# FIG. 4

```
        ┌─────────────────┐
        │      START      │
        └─────────────────┘
                 │
                 ▼               S201
        ┌─────────────────┐
        │  INPUT PROCESS  │
        └─────────────────┘
                 │
                 ▼               S202
        ┌─────────────────────┐
        │ ESTIMATE POWER      │
        │ GENERATED BY        │
        │ GENERATOR           │
        └─────────────────────┘
                 │
                 ▼               S203
        ┌─────────────────────┐
        │ ESTIMATE POWER      │
        │ DEMAND              │
        └─────────────────────┘
                 │
                 ▼               S204
        ┌──────────────────────────────┐
        │        ACQUIRE               │
        │ OVERCHARGING-OVERDISCHARGING │
        │           RISK               │
        └──────────────────────────────┘
                 │
                 ▼               S205
              ╱───────╲     NO (SELL POWER)
             ╱ Csb≧0 ? ╲──────────────────────┐
             ╲         ╱                       │
              ╲───────╱                        │
                 │ YES (BUY POWER)             │
                 ▼           S206              ▼           S207
   ┌─────────────────────────┐   ┌─────────────────────────┐
   │ CREATE                  │   │ CREATE                  │
   │ CHARGING-DISCHARGING    │   │ CHARGING-DISCHARGING    │
   │ PLAN OF HYBRID PCS      │   │ PLAN OF HYBRID PCS      │
   │ WHEN POWER IS BOUGHT    │   │ WHEN POWER IS SOLD      │
   └─────────────────────────┘   └─────────────────────────┘
                 │                           │
                 ▼◄──────────────────────────┘
                             S208
        ┌─────────────────┐
        │ OUTPUT PROCESS  │
        └─────────────────┘
                 │
                 ▼
        ┌─────────────────┐
        │      END        │
        └─────────────────┘
```

# FIG. 5

| TIME | 0:00 | 0:30 | 1:00 | 1:30 | ... | 23:30 |
|---|---|---|---|---|---|---|
| POWER-GENERATOR-GENERATED-POWER ESTIMATE | | | | | | |
| POWER DEMAND ESTIMATE | | | | | | |
| CHARGE-DISCHARGE TARGET VALUE | | | | | | |
| CHARGING-DISCHARGING RISK | | | | | | |
| POWER BUYING UNIT PRICE | | | | | | |
| POWER SELLING UNIT PRICE | | | | | | |
| STORAGE BATTERY SOC | | | | | | |

# FIG. 6

START

S301
ACQURE PCS CHARGE-DISCHARGE INDICATING VALUE Phpcs_mv(t)

S302
ACQUIRE MEASURED VALUE OF POWER Ppv_hpcs(t), GENERATED BY GENERATOR

S303
CALCULATE INDICATING VALUE Psb_hpcs_mv(t), INDICATING CHARGE-DISCHAEGE TO/FROM POWER STRAGE DEVICE, USING FOLLOWING EQUATION
$Psb\_hpcs\_mv(t) = Phpcs\_mv(t) - Ppv\_hpcs(t)$

S304
$Psb\_hpcs\_mv(t) > 0$ ?

NO

YES

S305
GIVE DISCHARGING INDICATION OF Psb_hpcs_mv(t) TO POWER STORAGE DEVICE

S306
GIVE CHARGING INDICATION OF -Psb_hpcs_mv(t) TO POWER STORAGE DEVICE

END

# FIG. 7

# FIG. 8

```
              ┌─────────────┐
              │    START    │
              └──────┬──────┘
                     │            ╭S201
              ┌──────▼──────┐
              │ INPUT PROCESS│
              └──────┬──────┘
                     │            ╭S202
          ┌──────────▼──────────┐
          │ ESTIMATE POWER      │
          │ GENERATED BY        │
          │ GENERATOR           │
          └──────────┬──────────┘
                     │            ╭S203
          ┌──────────▼──────────┐
          │ ESTIMATE POWER DEMAND│
          └──────────┬──────────┘
                     │            ╭S204
          ┌──────────▼──────────┐
          │ ACQUIRE OVERCHARGING-│
          │ OVERDISCHARGING RISK │
          └──────────┬──────────┘
                     │            ╭S204a
          ┌──────────▼──────────┐
          │ UPDATE OVERCHARGING- │
          │ OVERDISCHARGING RISK │
          └──────────┬──────────┘
```

S205

$Csb \geqq 0$ ?

NO (SELL POWER)

YES (BUY POWER)

S206 — CREATE CHARGING-DISCHARGING PLAN OF HYBRID PCS WHEN POWER IS BOUGHT

S207 — CREATE CHARGING-DISCHARGING PLAN OF HYBRID PCS WHEN POWER IS SOLD

S208 — OUTPUT PROCESS

END

FIG. 9

PCS PLANNED VALUE

POWER-GENERATOR-GENERATED-POWER ESTIMATE

0%
10%
20%
...%
100%

|  | −25 | −20 | −15 | −10 | −5 | 0 | 5 | 10 | 15 | ... | 45 |
|----|----|----|----|----|----|----|----|----|----|----|----|
| 0 | 1.0 | 1.0 | 1.0 | 1.0 | 1.0 | 1.0 | 0.9 | 0.8 | 0.7 |  | 0.0 |
| 5 | 1.0 | 1.0 | 1.0 | 1.0 | 1.0 | 1.0 | 1.0 | 0.9 | 0.8 |  | 0.0 |
| 10 | 1.0 | 1.0 | 1.0 | 1.0 | 1.0 | 1.0 | 1.0 | 1.0 | 0.9 |  | 0.0 |
| 15 | 1.0 | 1.0 | 1.0 | 1.0 | 1.0 | 1.0 | 1.0 | 1.0 | 1.0 |  | 0.1 |
| 20 | 1.0 | 1.0 | 1.0 | 1.0 | 1.0 | 1.0 | 1.0 | 1.0 | 1.0 |  | 0.1 |

EP 3 104 487 A1

## INTERNATIONAL SEARCH REPORT

| International application No. |
|---|
| PCT/JP2014/080250 |

A. CLASSIFICATION OF SUBJECT MATTER
*H02J3/32(2006.01)i, H02J7/34(2006.01)i*

According to International Patent Classification (IPC) or to both national classification and IPC

B. FIELDS SEARCHED

Minimum documentation searched (classification system followed by classification symbols)
H02J3/32, H02J7/34

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2005-143218 A (Nippon Telegraph and Telephone Corp.),<br>02 June 2005 (02.06.2005),<br>paragraphs [0010] to [0023]; fig. 1 to 4<br>(Family: none) | 1,3-5,9,10<br>2,6-8 |
| Y<br>A | JP 2012-222908 A (Kyocera Corp.),<br>12 November 2012 (12.11.2012),<br>entire text; all drawings; particularly,<br>paragraphs [0002] to [0004]<br>(Family: none) | 1,3-5,9,10<br>2,6-8 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>30 January 2015 (30.01.15) | Date of mailing of the international search report<br>10 February 2015 (10.02.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**EP 3 104 487 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011070927 A